# EUROPEAN PATENT APPLICATION

(11) **EP 3 379 474 A1**
(43) Date of publication of application: **26.09.2018**
(21) Application number: 17162826.6
(22) Date of filing: 24.03.2017
(51) Int. Cl.: G06Q 10/10

(54) **METHOD AND APPARATUS FOR ANALYSING CONTENT**

(71) Applicant: Vestel Elektronik Sanayi ve Ticaret A.S., 45030 Manisa (TR)
(72) Inventor: ÖZDEN, Özlem, 45030 Manisa (TR)
(74) Representative: Flint, Adam

(57) **Abstract**

Content (16) is sampled at a sampling frequency (fₛ) to obtain a sample (18) of the content (16). The sample (18) is analysed to obtain a classification according to genre of the sample (18). The classification is associated with a measure of success (βⱼ) of the classification. The measure of success (βⱼ) of the classification is compared with a predefined limit. In the case that the measure of success (βⱼ) of the classification is less than the predefined limit, the sampling frequency (fₛ) is increased. The sampling is repeated using the increased frequency (f_{s_new}) to obtain a new sample (18) of the content (16). The analysing is repeated using the new sample (18) of the content (16).

## Description

### Technical Field

The present disclosure relates to a method and apparatus for analysing content.

### Background

In the present disclosure, the term "video" is used as a generic term to include in general all types of video that can be viewed, including films/movies, television programmes, mobile videos, music videos, video/computer games, video clips, and the like. Likewise, in the present disclosure, the term "audio" is used as a generic term to include in general all types of audio that can be listened to, including music, radio plays, audio books and the like. The term "content" is used herein in general to refer to content that includes video, or audio, or video and audio.

Various techniques for analysing content are known. In some techniques, the content is analysed using computer software and/or hardware to determine the genre of the content. That is, the content is analysed by a computer system to determine the style or category or the like of the content, such as comedy, drama, musical, documentary, sport (including the type of sport), news, magazine/lifestyle, etc. This may be for a number of reasons, including for example being able to suggest other content of the same or similar genre to the viewer/listener, and being able to deliver advertisements that are likely to be of interest to the viewer/listener.

### Summary

According to a first aspect disclosed herein, there is provided a computer-implemented method of analysing content to determine the genre of the content, the method comprising:
sampling the content at a sampling frequency to obtain a sample of the content;
analysing the sample to obtain a classification according to genre of the sample, the classification being associated with a measure of success of the classification;
comparing the measure of success of the classification with a predefined limit; and,
in the case that the measure of success of the classification is less than the predefined limit, increasing the sampling frequency and repeating the sampling using the increased frequency to obtain a new sample of the content, and repeating the analysing using the new sample of the content.

Examples of embodiments enable accurate classification of the content to be achieved whilst keeping down power consumption and the requirement for computer resources, such as processor power.

In an example, the method comprises, after the repeating the analysing using the new sample of the content, repeating the comparing, the increasing the sampling frequency, the sampling, the analysing and the comparing, until the measure of success of the classification is greater than the predefined limit.

In an example, the method comprises, after the repeating the analysing using the new sample of the content, repeating the comparing, the increasing the sampling frequency, the sampling, the analysing and the comparing, until the measure of success of the classification is greater than the predefined limit or a predetermined number of iterations has been reached.

In an example, the analysing is carried out using a neural network.

In an example, the content comprises video content. In an example, the content comprises audio content. In an example, the content comprises video and audio content.

According to a second aspect disclosed herein, there is provided apparatus for analysing content to determine the genre of the content, the apparatus comprising:
a sampler for sampling content at a sampling frequency to obtain a sample of the content;
an analyser for analysing the sample to obtain a classification according to genre of the sample, the classification being associated with a measure of success of the classification according to genre;
a comparator for comparing the measure of success of the classification with a predefined limit; and,
a frequency control for, in the case that the measure of success of the classification is less than the predefined limit, increasing the sampling frequency;
the apparatus being arranged to repeat the sampling using the increased frequency to obtain a new sample of the content, and to repeating the analysing using the new sample of the content.

### Brief Description of the Drawings

To assist understanding of the present disclosure and to show how embodiments may be put into effect, reference is made by way of example to the accompanying drawings in which:
Figure 1 shows schematically an example of a deep learning neural network;
Figure 2 shows a schematic block diagram of an example of a content stream analyser; and
Figure 3 shows schematically an example of a method of analysing a content stream.

### Detailed Description

As mentioned, content may be analysed using computer software and/or hardware to determine the genre of the content. That is, the content is analysed by a computer system to determine the style or category or the like of the video content, such as comedy, drama, musical, documentary, sport (including the type of sport), news, magazine/lifestyle, etc. The content may be or include video, or audio, or video and audio. For convenience in the following, reference will sometimes be made to "video" or "video stream" or the like, it being understood that this may also include audio. In such a case, the video may be analysed without also analysing the audio, or the video and audio may both be analysed but separately and independently, or the video and audio may both be analysed together.

Neural networks may be used to classify input patterns based on example patterns which are used to train the networks during a training phase. Neural networks may in general be implemented using hardware and/or software.

Neural networks typically use a parallel set of connections of simple computational elements or processing units to produce a classification of the input pattern. Corresponding to the structure of the brain on which neural networks are modelled, the computational elements or processing units are known as neurons. The overall behaviour of a neural network is determined by the structure and strengths or weights of the adjustable connections between the neurons. The weights are adjusted during the training phase. After the training phase, the neural network responds uniquely to a particular input signal to provide a desired output signal.

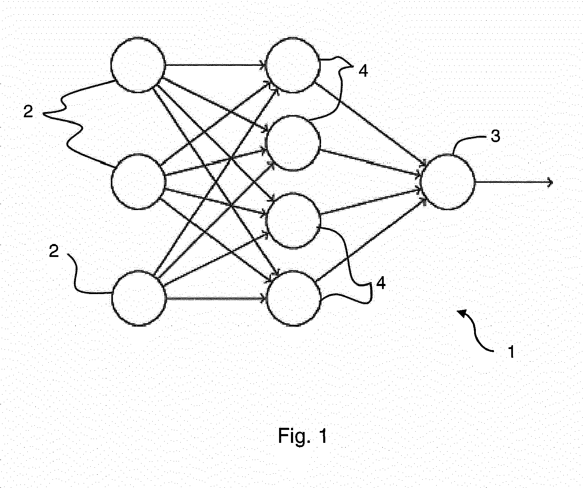

A so-called deep learning neural network is a neural network with a number of "hidden" layers between the input and output layers. This is shown schematically in Figure 1 which illustrates a simple deep learning neural network 1. The nodes or neurons 2 to the left side form the input layer to the neural network 1. The node(s) or neuron(s) 3 to the right side form the output layer of the neural network 1. The middle layer of nodes or neurons 4 is called a hidden layer, since the neurons 4 in this layer are neither inputs nor outputs. In the simple example shown in Figure 1 there is a single hidden layer, but typically there will be a (potentially) large number of hidden layers. Deep learning networks, with plural hidden or processing layers, enable input data or patterns to be analysed and represented with multiple levels of abstraction. Other types of neural networks are known.

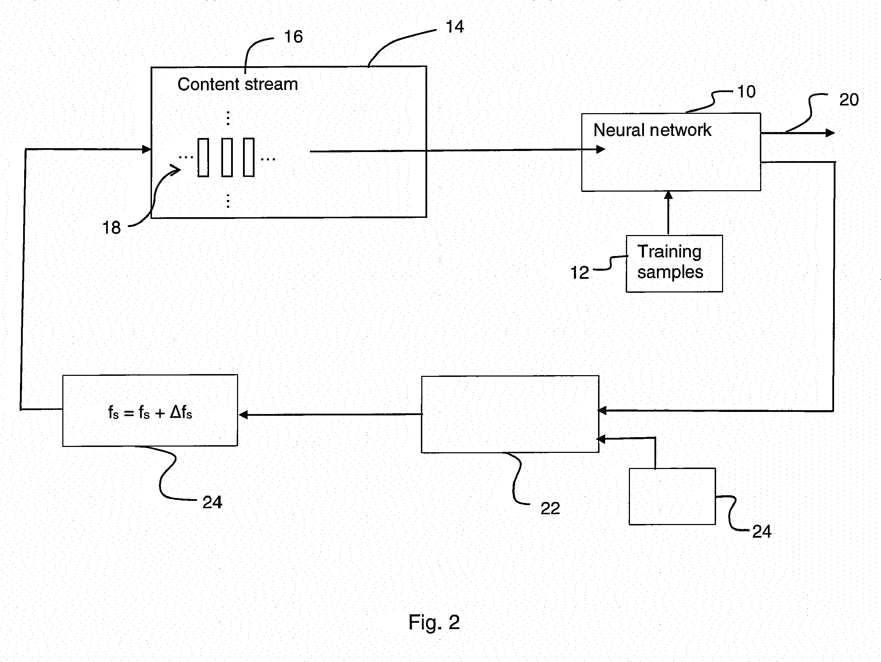

Referring now to Figure 2, an example of an embodiment of the present disclosure has a neural network 10, which may be a deep learning neural network or another type of neural network. Initially, during a set-up phase and as outlined above, training samples 12 are passed to the neural network 10 in order to train the neural network 10. The neural network 10 may analyse the training samples 12 using one or more techniques, including for example "OverFeat" (see "OverFeat: Integrated Recognition, Localization and Detection using Convolutional Networks" by Sermanet et al, 2013), "AlexNet" (see "ImageNet Classification with Deep Convolutional Neural Networks" by Alex Krizhevsky et al, 2012) and "GoogleNet" (see "Going Deeper With Convolutions" by Szegedy et al, 2015), etc. The samples for the learning phase may be for example pixels, a still (which may be for example a photograph or a still from a video) with the combination of pixels, a segment of video, a segment of audio, etc.

An input content stream 16 is then analysed. The content stream 16 may be video only, or audio only, or a combination of video and audio.

In use, in order to analyse an input content stream 16, the content stream 16 is sampled in a sampler 14 to provide samples 18. As will be discussed further below, the content stream 16 is sampled at a sampling frequency fₛ. Moreover, the sampling may be such that each sample 16 may have a certain duration Tₛ. In the case of the input content stream 16 being or including video, the sampling duration Tₛ may be such that the individual samples 18 represent for example a frame of a moving image that makes up the video stream 16. In other examples, the samples 18 may represent a number of frames of the video stream 16. The sampling may obtain frames or other samples effectively at random (albeit using the sampling frequency).

The samples 18 are passed from the sampler 14 to the neural network 10 for analysis, in this example in order to classify the samples 18 and therefore the content stream 16 according to genre, in keeping with the training samples that were used to train the neural network 10. Similarly to what happens during the training phase, the samples 18 from the content stream 16 are analysed and classified using one or more techniques. For example, in the case of video, this may include shot segmentation, shot length computation, motion computation, colour variance, etc. The classification of the individual samples 18 according to genre by the neural network 10 may then be combined, such as by averaging, to obtain the classification of the content stream 16 according to genre, which is then provided as an output 20 from the neural network 10.

In practice, it is rare that the classification leads to a definite indication of the genre of the content stream 16, i.e. that the classification has a 100% certainty. Instead, the output classification typically is or includes a measure of the probability of the content stream 16 being of a particular genre, that is a measure of success of the classification. Indeed, the output classification is typically a measure of the probability of the content stream 16 being of a number of particular genres, that is, for each genre, a measure of success of the classification. As a simple example to illustrate this, the output 20 may be that the content stream 16 is a sports programme with 95% probability and a magazine programme with 5% probability. However, a problem with this is that in some cases, the measure or measures of success or the probability or probabilities that are output may be low and therefore not reliable.

Accordingly, and returning to Figure 2, the output from the neural network 10 is also passed to a percentage analyser 22. This compares the measures of success of the classification, i.e. in this example the probabilities of the content stream 16 belonging to a certain genre, with a predefined limit. The predefined limit may be input by a user 24 and may be variable or fixed. If the content stream 16 has been classified as being of a single genre, with a certain measure or probability, that measure or probability is compared with the limit by the percentage analyser 22. If the content stream 16 has been classified as (possibly) being one of a number of specified genres, each with a certain measure of success or probability, then the highest value measure or probability of the number of measures or probabilities is compared with the limit by the percentage analyser 22.

If the percentage analyser 22 determines that the measure of success of the classification, or the probability of the content stream 16 being of a particular genre, is below the predefined limit, then a sampling frequency control 24 operates to increase the sampling frequency that is used by the content sampler 14. In particular, the frequency control 24 increases the sampling frequency from the initial value fₛ to an increased frequency fs + Δfₛ. The increase Δfₛ may be for example a fixed amount (i.e. a certain number of frequency cycles) or for example a percentage of the current value of the sampling frequency fₛ.

The new, increased sampling frequency is passed to the sampler 14 which then samples the content stream 16 at the new sampling frequency. This results in new samples 18 being produced, which are then passed to the neural network 10 for analysis. The process may be repeated as necessary until the content stream 16 is analysed to produce a classification that has a success probability higher than the predefined limit.

As a specific example, a video stream 16 may have been classified on a first pass through the neural network as being a sports programme with a probability of 80%. The predefined limit may be say 90%. The sampling frequency is therefore increased and the video stream sampled again and the (new) samples 18 analysed. This may result in the classification as a sports programme that is above the limit of 90%, in which case the sampling and analysis is complete. Otherwise, if the classification as a sports programme is below the limit of 90%, the sampling frequency is increased again and the process repeated as necessary.

Examples of embodiments of the present disclosure enable a content stream to be classified according to genre without having to look up or obtain other data about the content stream (such as may be present in an EPG (electronic programme guide), which can be inaccurate or incomplete). The accuracy of the classification according to genre can be maintained whilst keeping down the demands for processing power and electrical power consumption, as the sampling frequency and therefore the power consumption of the apparatus is only raised when necessary in order to achieve the desired accuracy.

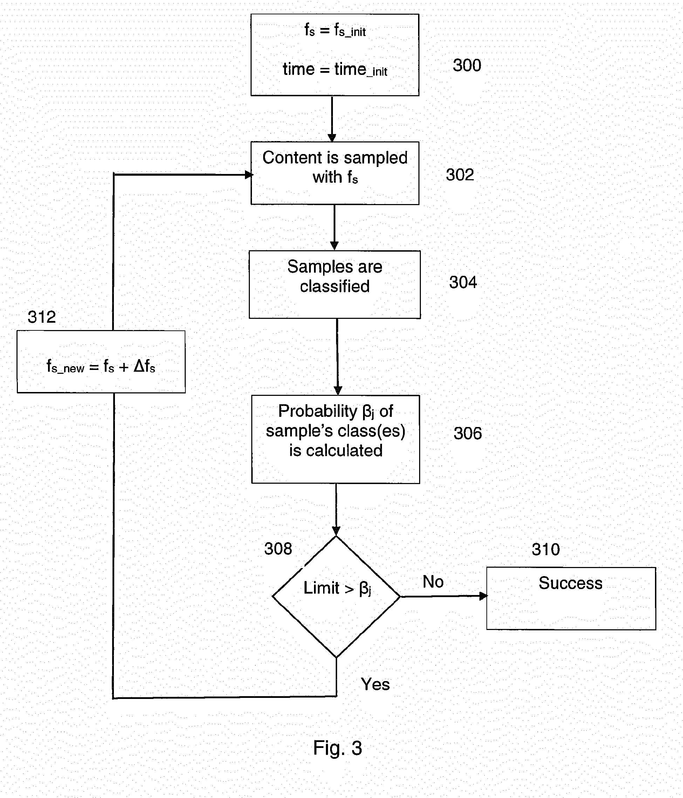

An example of the process is shown schematically in Figure 3. Initially, the sampling frequency fₛ is set at an initial value f_{s_init} at 300. The duration of each of the samples is also set to an initial value time_ᵢₙᵢₜ at 300.

At 302, the content stream 16 is sampled to produce the samples 18. The sampling uses the initial sampling frequency f_{s_init} and the duration time_{_init}. The samples 18 are then classified at 304.

At 306, the probability βⱼ of the sample class (i.e. the measure of success or the probability that the class allocated to the sample is correct) is calculated. At 308, the probability βⱼ of the sample class is compared with the specified limit. If the limit is not greater than the probability βⱼ of the sample class, then the classification is judged a success 310. Otherwise, if the limit is greater than the probability βⱼ of the sample class, then at 312 the sampling frequency fₛ is increased, in this example by an amount Δfₛ to a new value f_{s_new}. The new value for the sampling frequency is then passed to the neural network and the process repeated from the sampling step 302.

The whole process, including increasing the sampling frequency fₛ if necessary, may be repeated until the classification of a sample is achieved with a probability higher than the predefined limit.

There may be some overall limit on the number of iterations of the process so as to prevent the process running indefinitely in case a classification cannot be achieved with a probability greater than the predefined limit. Alternatively or additionally, once a certain number of iterations of the process has been reached without success, the user may be warned and prompted to lower the predefined limit for the probability of success.

In the above, it was described that the percentage analyser 20 compares the measures of success or the probabilities of the content stream 16 belonging to a certain genre with a predefined limit. In other examples, the percentage analyser 20 compares the measures of success or the probabilities of the individual samples 18 of the content stream 16 belonging to a certain genre with a predefined limit.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. For example, a neural network is described above for analysing the video samples. However, other analytic techniques may be used.

Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method of analysing content to determine the genre of the content, the method comprising:
sampling the content at a sampling frequency to obtain a sample of the content;
analysing the sample to obtain a classification according to genre of the sample, the classification being associated with a measure of success of the classification;
comparing the measure of success of the classification with a predefined limit; and,
in the case that the measure of success of the classification is less than the predefined limit, increasing the sampling frequency and repeating the sampling using the increased frequency to obtain a new sample of the content, and repeating the analysing using the new sample of the content.

2. A method according to claim 1, comprising, after the repeating the analysing using the new sample of the content, repeating the comparing, the increasing the sampling frequency, the sampling, the analysing and the comparing, until the measure of success of the classification is greater than the predefined limit.

3. A method according to claim 1, comprising, after the repeating the analysing using the new sample of the content, repeating the comparing, the increasing the sampling frequency, the sampling, the analysing and the comparing, until the measure of success of the classification is greater than the predefined limit or a predetermined number of iterations has been reached.

4. A method according to any of claims 1 to 3, wherein the analysing is carried out using a neural network.

5. A method according to any of claims 1 to 4, wherein the content comprises video content.

6. A method according to any of claims 1 to 5, wherein the content comprises audio content.

7. Apparatus for analysing content to determine the genre of the content, the apparatus comprising:
a sampler for sampling content at a sampling frequency to obtain a sample of the content;
an analyser for analysing the sample to obtain a classification according to genre of the sample, the classification being associated with a measure of success of the classification according to genre;
a comparator for comparing the measure of success of the classification with a predefined limit; and,
a frequency control for, in the case that the measure of success of the classification is less than the predefined limit, increasing the sampling frequency;
the apparatus being arranged to repeat the sampling using the increased frequency to obtain a new sample of the content, and to repeating the analysing using the new sample of the content.

8. Apparatus according to claim 7, the apparatus being arranged such that, after repeating the analysing using the new sample of the content, the apparatus repeats the comparing, the increasing the sampling frequency, the sampling, the analysing and the comparing, until the measure of success of the classification is greater than the predefined limit.

9. Apparatus according to claim 7, the apparatus being arranged such that, after repeating the analysing using the new sample of the content, the apparatus repeats the comparing, the increasing the sampling frequency, the sampling, the analysing and the comparing, until the measure of success of the classification is greater than the predefined limit or a predetermined number of iterations has been reached.

10. Apparatus according to any of claims 7 to 9, wherein the analyser is a neural network.
